# EUROPÄISCHE PATENTSCHRIFT

(11) **EP 0 580 574 B1**
(45) Veröffentlichungstag und Bekanntmachung des Hinweises auf die Patenterteilung: **18.10.1995**
(21) Anmeldenummer: 91908351.9
(22) Anmeldetag: 17.04.1991
(51) Int. Cl.: F16H 3/10, F16D 41/08

(54) **SCHALTKUPPLUNG FÜR EIN SCHALTGETRIEBE**
CLUTCH FOR A GEARBOX
EMBRAYAGE POUR BOITE DE VITESSES

(43) Veröffentlichungstag der Anmeldung: 02.02.1994
(73) Patentinhaber: LEE, Sangchin, D-71640 Ludwigsburg (DE)
(72) Erfinder: LEE, Sangchin, D-71640 Ludwigsburg (DE)
(74) Vertreter: Dreiss, Fuhlendorf, Steimle & Becker, Patentanwälte
(86) Internationale Anmeldenummer: EP9100726
(87) Internationale Veröffentlichungsnummer: WO9218790

(56) Entgegenhaltungen:
- WO-A-90/14530
- DE-C- 587 997
- GB-A- 640 233
- GB-A- 2 068 063
- GB-A- 2 164 409
- US-A- 2 567 446
- US-A- 4 817 451

## Beschreibung

Die Erfindung betrifft eine Schaltkupplung für ein Schaltgetriebe zum Ankuppeln mindestens eines auf einer Welle frei drehbaren, axial unverschieblichen Zahnrads mittels eines Freilaufs an diese Welle des Getriebes, wobei das bzw. jedes frei drehbare Zahnrad mit einem bzw. jeweils einem drehfest auf einer parallelen Welle des Getriebes gehaltenen Zahnrad in ständigem Zahneingriff steht, wobei der bzw. jeder Freilauf mittels einer Schaltmuffe betätigbar ist, die koaxial auf der Welle des frei drehbaren Zahnrads neben letzterem angeordnet und in Achsrichtung begrenzt verschiebbar ist, und wobei jede Rolle des Freilaufs bei betätigter Schaltmuffe zur Drehmomentübertragung gleichzeitig an einer zugeordneten Klemmfläche der Welle oder eines auf der Welle drehfest gehaltenen Klemmrollenträgers und an einer Innenfläche ihres Zahnrads anliegt, daß außerdem die Klemmfläche und die Innenfläche jeweils einen sich in Mitnahmerichtung verengenden Spalt für die zugeordnete Rolle bilden. Eine derartige Schaltkupplung ist durch die US-A-4 817 451 bekannt geworden. Die Schaltmuffe greift dort mit einem seitlich vorstehenden Zapfen in eine axiale Ausnehmung eines Käfigs für die Rollen ein. Dadurch ist der Käfig am Mitdrehen gehindert und die Rollen befinden sich im weiten Spaltbereich des Freilaufs, so daß sie kein Drehmoment übertragen können. Je ein links und rechts jeder Rolle angeordneter radial vorstehender Steg des Käfigs liegen an einer äußeren Zylinderfläche des Zahnrads an. Sobald man durch Verschieben der Schaltmuffe den betreffenden Käfig freigibt, nimmt ihn das Zahnrad aufgrund der zwischen ihm und den Stegen vorhandenen Reibungskraft mit. Die Rollen werden infolgedessen in den engen Bereich des sich verengenden Spalts des Freilaufs gedrückt und dadurch erfolgt ein kraftschlüssiges Ankuppeln des betreffenden Zahnrads an die zugeordnete Welle.

Das notwendige ständige Anliegen der beiden Stege des Käfigs führt zu einem entsprechenden Reibungsverlust und zu Reibungswärme. Der Reibungsverlust bedeutet einen Energieverlust im Getriebe. Die Reibung bewirkt einen Wärmeverlust und auch eine Belastung für das Öl. Verschleißbedingt kann es zu Funktionsstörungen kommen.

Die Aufgabe der Erfindung besteht infolgedessen darin, eine Schaltkupplung der eingangs beschriebenen Art so weiterzubilden, daß ein stets einwandfreies, dauerhaft funktionierendes Ankuppeln des Zahnrads an seine Welle möglich ist.

Zur Lösung dieser Aufgabe wird erfindungsgemäß vorgeschlagen, daß die Schaltkupplung gemäß dem Oberbegriff des Anspruchs 1 dadurch gekennzeichnet ist, daß ein seitlich neben jedem frei drehbaren Zahnrad angeordneter, auf der Welle frei drehbarer Schaltscheibenkörper mit Schaltstegen zwischen jeweils zwei Rollen eingreift und jede Schaltmuffe wenigstens ein Schiebestück trägt, dessen zur Schieberichtung geneigt verlaufende Schiebefläche an einer geneigten Gegenfläche eines zugeordneten, radial vorstehenden Schiebestücks des Schaltscheibenkörpers anliegt, wobei eine seitliche Verschiebung der Schaltmuffe eine Drehbewegung des Schaltscheibenkörpers mit den Schaltstegen im Sinne einer Verschiebung der Rollen gegen das jeweilige enge Spaltende des Freilaufs hin bewirkt, wobei mindestens eine Feder gespannt wird, die zwischen den Schaltscheibenkörper und ein wellenfestes Element, insbesondere einen Bolzen, geschaltet ist, und daß das Zahnrad auf den Schaltstegen frei drehbar gelagert ist und die Rollen mittels je einer Blattfeder gegen das jeweilige enge Spaltende des Freilaufs hin federbelastet ist. Das Schalten bzw. das Ankuppeln des oder jeweils eines frei drehbaren Zahnrads an seiner Welle erfolgt wie bei der vorbekannten Schaltkupplung durch seitliches Verschieben der Schaltmuffe. Über ein Paar schräger Flächen des mitbewegten Schiebestücks wird die seitliche Verschiebebewegung der Schaltmuffe in eine kleine Drehbewegung des Schaltscheibenkörpers umgesetzt, wobei gleichzeitig die mindestens eine Rückstellfeder gespannt wird. Die Drehbewegung des Schaltscheibenkörpers bewirkt ein Hineindrängen der Rollen in den engeren Teil des Spaltraums ihres Freilaufs und dadurch eine kraftschlüssige Ankupplung des betreffenden Zahnrads an seine Welle. Wenn die Schaltmuffe zurückgestellt wird, so zieht die bzw. ziehen die zuvor gespannten Federn den Schaltscheibenkörper in seine Ausgangsdrehlage zurück, wodurch die Rollen in den weiten Teil des keilförmigen Spaltraums des Freilaufs gelangen und dadurch die kraftschlüssige Verbindung des Zahnrads mit seiner Welle aufgehoben wird. Das Zahnrad behält auch im abgekuppelten Zustand seine konzentrische Stellung zu seiner Welle bei, weil es sich dabei auf den Schaltstegen abstützt. Das An- und Abkuppeln des Zahnrads an seiner Welle hängt aber nicht von einem Reibschluß zwischen den Schaltstegen und dem Zahnrad ab, weswegen in der angestrebten Weise das Ankuppeln des Zahnrads auch nach längerem Betrieb grundsätzlich gewährleistet ist, weil an dieser Stelle kein nennenswerter Verschleiß auftritt.

Der große Vorteil dieser Schaltkupplung liegt darin, daß beim Schalten bzw. Weiterschalten der verschiedenen Gänge keine Trennung von Motor und Schaltgetriebe über eine separate Kupplung mehr notwendig ist.

Vorteilhafte Weiterbildungen dieser Schaltkupplung sind in den Ansprüchen 2 bis 13 beschrieben. Dabei ist unter anderem insbesondere vorgesehen, daß bei Talfahrten, also bei den Motor schiebendem Fahrzeug, der Freilauf infolge einer weiteren axialen Verschiebung der Schaltmuffe über eine die Klemmung der Klemmrollen bewirkende Stellung hinaus, ausgeschaltet und zusätzlich zum Kraftschluß ein Formschluß hergestellt wird. Diese formschlüssige Verbindung nimmt bei schiebendem Motor - das heißt bei Bergfahrten - keine Kräfte auf, weil dabei das Drehmoment über den Kraftschluß, der durch die Klemmung der Klemmrollen gegeben ist, übertragen wird.

Ein Ausführungsbeispiel der Erfindung und ihrer vorteilhaften Weiterbildungen sind im folgenden unter Bezugnahme auf die beigefügten Zeichnungen beschrieben. Es stellen dar:
- Figur 1: ein Ausführungsbeispiel;
- Figur 1a: eine vergrößerte Darstellung des Bereichs Ia in Figur 1;
- Figur 1b: eine vergrößerte Darstellung des Bereichs lb in Figur 1;
- Figur 2: einen Schnitt entlang der Linie II-II in Figur 1;
- Figur 2a: ein vergrößerter Schnitt entlang der Linie IIa-IIa in Fig. 2;
- Figur 2b: eine vergrößerte Darstellung des Bereiches IIb in Fig. 2;
- Figur 3: einen Schnitt in Richtung der Pfeile III-III in Figur 1;
- Figur 3a: eine vergrößerte Darstellung des Bereiches IIIa in Fig. 3;
- Figur 4: eine Ansicht in Richtung der Pfeile IV-IV in Figur 1, jedoch derart, daß zur Verdeutlichung die Zahnräder 13 und 14, sowie die Schaltmuffe 37, nicht jedoch das daran befestigte Schiebestück 39, weggenommen sind;
- Figur 5: eine Ansicht in Richtung der Pfeile V-V (Zahnrad 13 für den Rückwärtsgang) in Figur 4;
- Figur 5a: Draufsicht und Seitenansicht des Schiebestückes 39;
- Figur 5b: Draufsicht und Seitenansicht des Schiebestückes 44;
- Figur 6: eine Ansicht in Richtung der Pfeile VI-VI (Zahnrad 14 für den 1. Gang) in Figur 4;
- Figuren 7a,7b,7c: Stellungen des Schiebestücks 44 bei Mittelstellung (Leerlauf), erster Schaltstellung (kraftschlüssige Klemmung) und zweiter Schaltstellung (formschlüssige Synchronisation).
- Figur 8: ein Schnitt entlang der Linie VIII-VIII in Fig. 1a;
- Figur 9: ein Schnitt entlang der Linie IX-IX in Fig. 8.

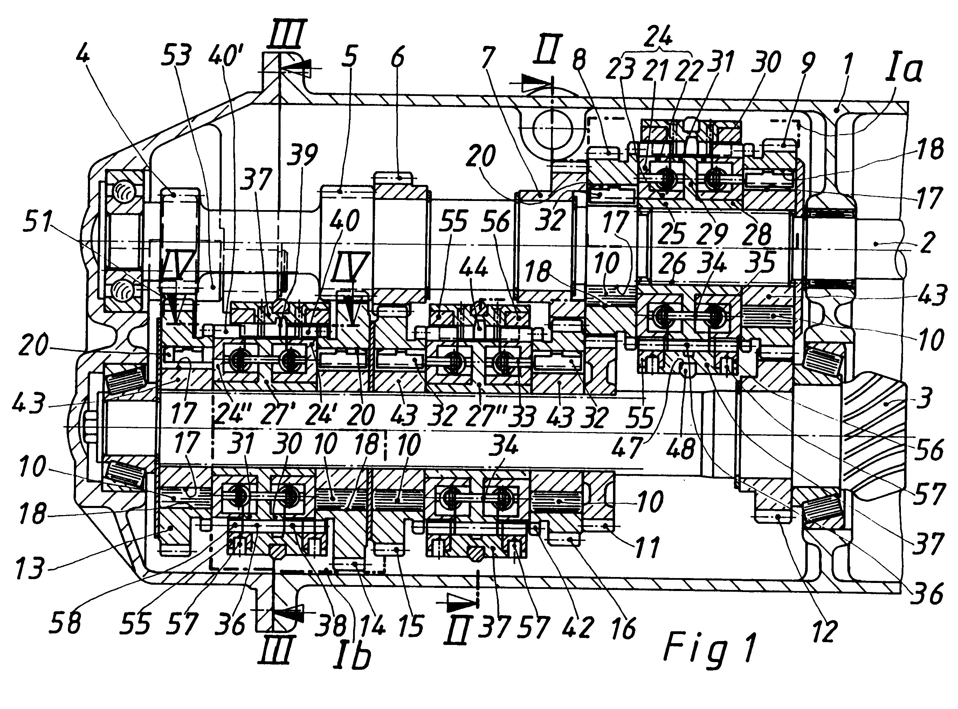

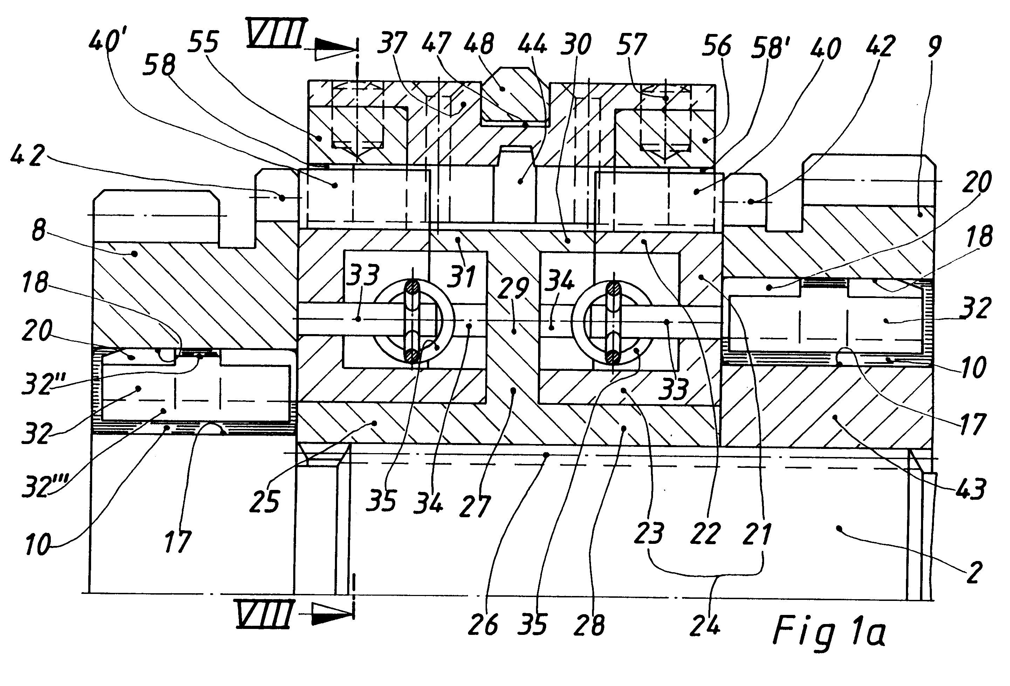

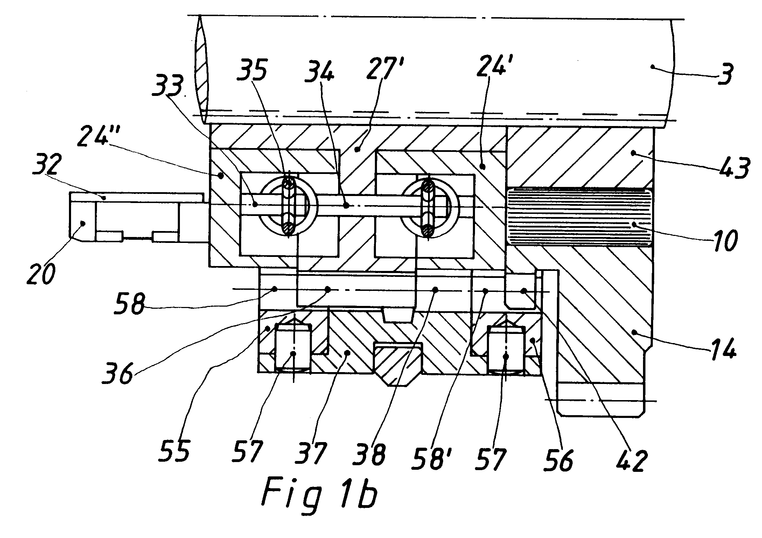

Figur 1 zeigt ein Schaltgetriebe mit fünf Vorwärtsgängen und einem Rückwärtsgang. So weit der Aufbau demjenigen herkömmlicher Schaltgetriebe gleicht, wird bei der Beschreibung davon ausgegangen, daß deren Funktionsweise dem Duchschnittsfachmann geläufig ist, so daß lediglich kurze Bezugnahmen genügen.

Im Gehäuse 1 ist eine Antriebswelle 2 und eine Abtriebswelle 3 gelagert. Die Antriebswelle 2 wird an ihrem in Figur 1 rechten Ende von einem Motor (nicht gezeigt) angetrieben. Die Abtriebswelle 3 greift mit ihrem in Figur 1 rechten Ende in ein (nicht gezeigtes) Differentialgetriebe ein, das Antriebsräder (z.B. die Vorderräder) eines Kraftfahrzeuges antreibt.

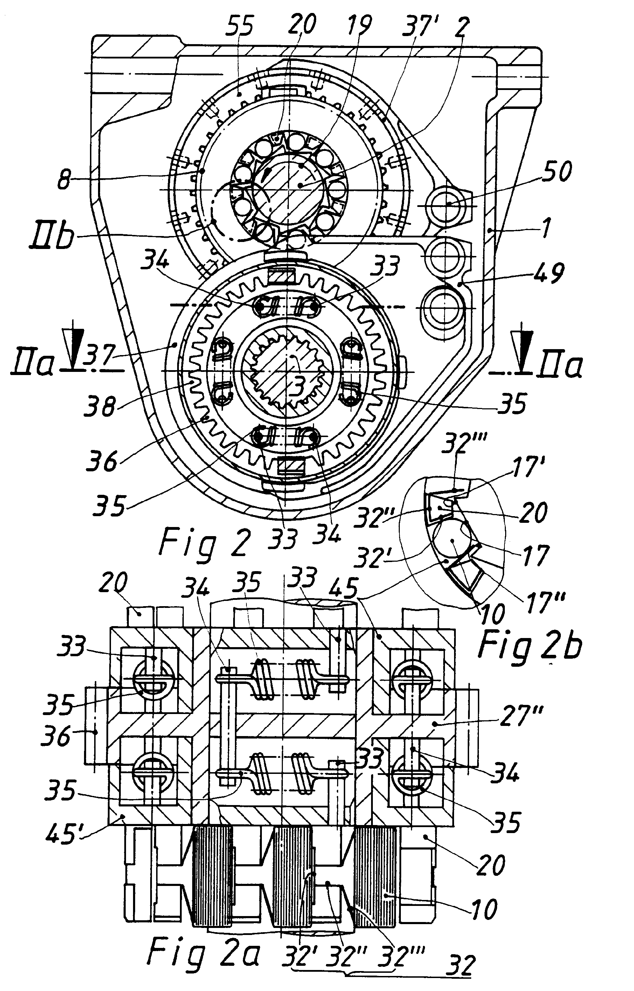

Auf der Antriebswelle 2 sitzt fest verkeilt das Zahnrad 4 für den Rückwärtsgang, das Zahnrad 5 für den ersten Gang, das Zahnrad 6 für den zweiten Gang und das Zahnrad 7 für den dritten Gang. Ferner sind über der Antriebswelle 2 das Zahnrad 8 für den vierten Gang und das Zahnrad 9 für den fünften Gang angeordnet. Die Zahnräder 8 (4.Gang) und 9 (5. Gang) sind jedoch nicht direkt mit der Antriebswelle 2 verbunden. Diese beiden letztgenannten Zahnräder sitzen vielmehr mit Abstand über der Antriebswelle 2. Innerhalb der Innenflächen 18 der Zahnräder 8 bzw. 9 sind Klemmrollen 10 und Schaltstege 20 angeordnet. Auf den Schaltstegen 20 sind die Zahnräder 8 bzw. 9 gelagert. Dabei wirken die Schaltstege 20 ferner über die U-förmig gebogenen Blattfedern 32 auf die Klemmrollen 10 ein (vgl. auch Figuren 2,3,5,6). Die Klemmrollen 10 sitzen außen entweder - wie bei Zahnrad 8 - direkt auf der mit Klemmflächen 17 versehenen Außenseite der Antriebswelle 2 oder - wie bei Zahnrad 9 - auf dem ebenfalls mit Klemmflächen 17 versehenen Klemmrollenträgerkörper 43, der mittels der Kerbverzahnung 26 mit der Antriebswelle 2 verzahnt ist, so daß er mit dieser mitdreht. Die Klemmrollen 10 können - wie noch zu beschreiben sein wird - in zwei Stellungen gebracht werden, nämlich in eine Stellung **(Schaltstellung)**, in der sie eine kraftschlüssige Kopplung von der Antriebswelle 2 auf die Zahnräder 8 oder 9 bewirken. Ist dies nicht der Fall, so befinden sie sich in **Leerlauf-Stellung**, in der die Zahnräder auf der Antriebswelle 2 frei laufen können.

Auf der Abtriebswelle 3 ist ein Zahnrad 11 für den vierten Gang und ein Zahnrad 12 für den fünften Gang fest angeordnet. Ferner sind ein Zahnrad 13 für den Rückwärtsgang, ein Zahnrad 14 für den ersten Gang, ein Zahnrad 15 für den zweiten Gang, sowie ein Zahnrad 16 für den dritten Gang ebenso gelagert, wie dies bereits oben bei den Zahnrädern 8 bzw. 9 beschrieben wurde.

Wie bereits erwähnt und wie ferner aus Figur 2b hervorgeht, sitzt das Zahnrad 8 im Abstand über der Antriebswelle 2, gelagert auf den Schaltstegen 20. Entlang ihres Umfangs ist die Antriebswelle 2 mit mehreren Klemmflächen 17 versehen. Gegenüber einer gedachten Tangente an einem Kreis um die Achse der Antriebswelle 2 sind die Klemmflächen 17 derart schräg geneigt, daß ihr Abstand von der Innenfläche 18 des Zahnrades 8 an der Stelle 17′, an der der Abstand am kürzesten ist, geringer als der Durchmesser der Klemmrolle 10 ist. An der Stelle 17˝ hingegen, an der der Abstand am größten ist, ist dieser Abstand größer als der Durchmesser der Klemmrolle 10. Wird also die Klemmrolle 10 in Figur 2 im Verhältnis zur Antriebswelle 2 im Uhrzeigersinn gedreht und dreht sich dabei die Antriebswelle 2 im Gegenuhrzeigersinn (in Richtung des Pfeils 19), so erfolgt eine Klemmung der Klemmrolle 10 zwischen der Klemmfläche 17 der Antriebswelle 2 und der Innenfläche 18 des Zahnrades 8. Dabei erfolgt gegenüber der Stellung, die die Klemmrollen 10 in Figur 2 haben, eine geringfügige Verschiebung nach rechts im Uhrzeigersinn, also entgegen der durch den Pfeil 19 gegebenen Drehrichtung der Antriebswelle 2. In dieser Position ist dann ein **Kraftschluß** zwischen Antriebswelle 2 und Zahnrad 8 hergestellt. Das ist die **"Schaltstellung"**. Sie bleibt erhalten, solange die Antriebswelle 2 angetrieben wird.

Werden jedoch die Klemmrollen 10 gegenüber der in Figur 2 eingezeichneten Stellung im Gegenuhrzeigersinn relativ zur Antriebswelle 2 verschoben, so befinden sie sich an der Stelle, an der ihr Durchmesser geringer als der Abstand zwischen Klemmfläche 17 und der Innenfläche 18 des Zahnrades ist, so daß dann das Zahnrad 8 gegenüber der Welle 2 frei durchdrehen kann **(Leerlauf-Stellung)**.

Wie ebenfalls aus Figur 2b ersichtlich, sind entlang des Umfangs der Antriebswelle 2 zwischen den Klemmrollen 10 im Querschnitt ungefähr trapezförmige Schaltstege 20 angeordnet. Diese Schaltstege sind entlang des Umfangs einer Schaltscheibe 21 angeordnet (vgl. Figur 1a). Die Schaltscheibe 21 ist Teil eines Schaltscheibenkörpers 24, der ferner die äußere Nabe 22 und die innere Nabe 23 umfaßt. Der Schaltscheibenkörper 24 hat also die Form eines U-förmigen Ringkörpers. An der Schaltscheibe 21 sitzen gleichsam nach Art eines Käfigs die genannten Schaltstege 20. Der Schaltscheibenkörper 24 sitzt drehbar auf dem linken unteren Flansch 25 eines auf der Antriebswelle 2 mittels Kerbverzahnung 26 fest angeordneten und somit mitdrehenden Synchronkörpers 27, der ferner noch einen rechten unteren Flansch 28, einen Mittelsteg 29, einen linken oberen Flansch 31 und einen rechten oberen Flansch 30 aufweist.

Wird der Schaltscheibenkörper 24 und mit ihm die Schaltscheibe 21 auf dem Synchronkörper 27 verschoben, so wird damit entweder - wie beschrieben - eine kraftschlüssige Klemmung der Klemmrollen 10 zwischen der Klemmfläche 17 der Antriebswelle 2 und der Innenfläche 18 des Zahnrades 8 und damit eine Kopplung in Antriebsrichtung (Pfeil 19) bewirkt, oder aber - bei entgegengesetzter Verschiebung des Schaltscheibenkörpers 24 - die kraftschlüssige Kopplung getrennt, so daß die Antriebswelle 2 und Zahnrad 8 gegeneinander frei laufen können. Diese beiden Stellungen des Schaltscheibenkörpers 24 auf dem Synchronkörper sind in Anspruch 1 als "Relativ"-Stellungen des Schaltscheibenkörpers 24 bzw.der Schaltscheibe 21 gegenüber der Antriebswelle 2 bzw. dem Klemmrollenträgerkörper 43 bezeichnet.

Die Einwirkung der an der Schaltscheibe 21 fest angeordneten Schaltstege 20 auf die Klemmrollen 10 erfolgt nicht direkt, sondern über Blattfedern 32 (vgl. Fig. 2b). Sie sind U-förmig gebogen; mit ihrem kürzeren Schenkel 32′ und ihrem Mittelsteg 32˝ sitzen sie in einer Nut im Schaltsteg 20; mit ihrem freieren, längeren Schenkel 32‴ drücken sie jeweils gegen eine Klemmrolle 10.

Die Neigung der Klemmflächen 17 muß so bestimmt sein, daß bei Antrieb des Motors die Reibungskräfte, mit denen die Klemmflächen 17 auf die Klemmrollen 10 einwirken, die Klemmrollen 10 weiter in Klemmstellung drücken. Bei den Zahnrädern 8 und 9 sind also die Klemmflächen 17 der **An**triebswelle 2 bzw. des Klemmrollenträgerkörpers 43 derart geneigt, daß sich der Abstand von den Innenflächen 18 in Richtung des Uhrzeigersinns (entgegen der durch Pfeil 19 dargestellten Antriebsrichtung) verringert.

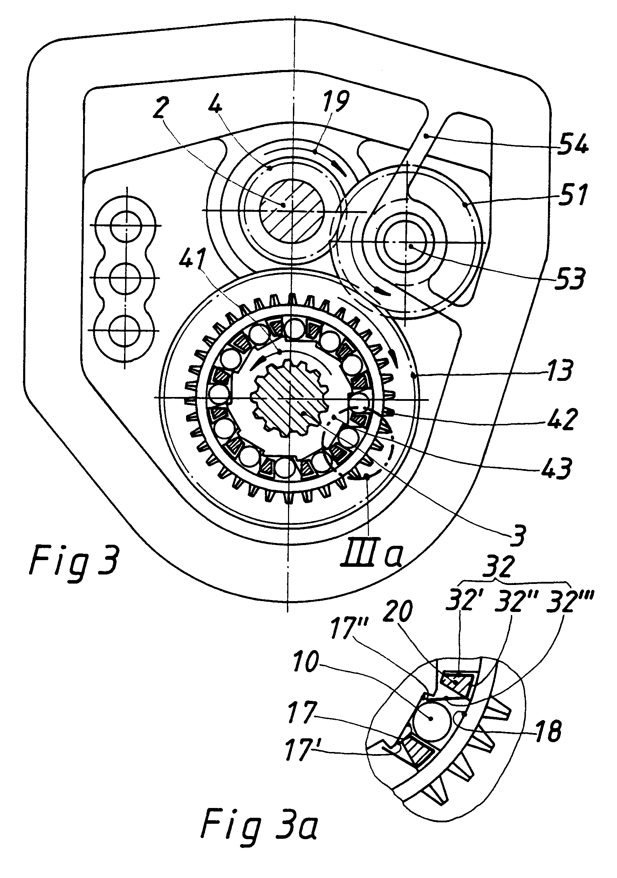

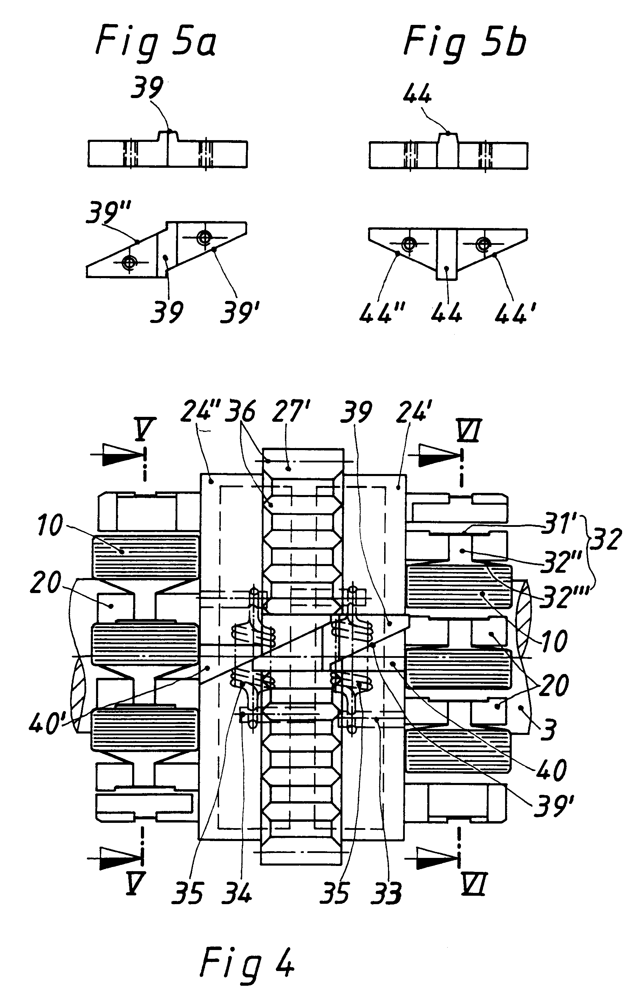

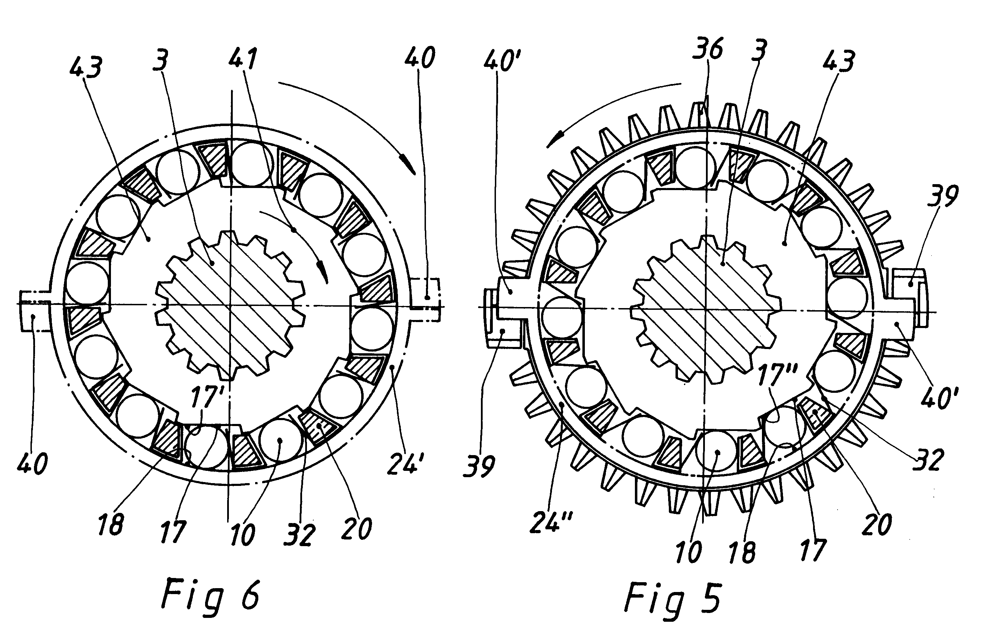

Wenn jedoch, wie z.B. bei dem auf der **Ab**triebswelle 3 sitzenden Zahnrades 13, das Zahnrad vom Motor angetrieben wird und die Welle treibt, dann muß die Steigung der Klemmflächen 17 umgekehrt sein, also derart, wie dies aus Figur 5 ersichtlich ist. Zwar ist in Figur 5 das über den Klemmrollen 10 und den Schaltstegen 20 laufende Zahnrad 13 nicht mit eingezeichnet. Es ist aber aus Fig. 3 ersichtlich, daß es in diesem Fall das äußere Zahnrad 13 ist, das, wenn im Gegenuhrzeigersinn von Zahnrad 4 angetrieben - über Zahnrad 51 wegen der für den Rückwärtsgang erforderlichen Bewegungsumkehr -, die Klemmrollen 10 in die Klemmstellung zwischen den Klemmflächen 17 und der Innenfläche 18 des zugeordneten Zahnrades 13 drückt.

Schiebt jedoch das Fahrzeug den Motor, (z.B. bei Talfahrt oder wenn das Gas weggenommen wird) dann ergibt sich aus den Figuren 2, 2b, daß das Zahnrad 8 in Richtung des Pfeiles 19 gedreht wird, und zwar schneller als die Antriebswelle 2. Das Zahnrad 8 "überholt" die Antriebswelle 2. Dann löst sich die Klemmung. Es ergibt sich Freilauf in der Leerlauf-Stellung.

Dasselbe gilt in den Figuren 4 und 5, wenn die Abtriebswelle 3 schneller dreht als die darauf gelagerten Zahnräder 13 bis 16.

Aus Figur 1a ist ersichtlich, daß an den Schaltscheiben 21 Bolzen 33 vorgesehen sind. Ferner sind an dem Mittelsteg 29 des Synchronkörpers 27 Bolzen 34 vorgesehen. Zwischen den Bolzen 33 und den Bolzen 34 sind Zugfedern 35 eingehängt. Diese Zugfedern 35 ziehen die Bolzen 33 und 34 aufeinander zu. Das ist auch aus Fig. 2a und 4 zu ersehen. Dadurch wird der Schaltscheibenkörper 24 von dem Synchronkörper 27 immer in einer ganz bestimmten Relativ-Stellung mitgeschleppt. In der Relativ-Stellung, die diejenige nach Figur 2 ist, kann das Zahnrad 8 gegenüber der Antriebswelle frei drehen. Erst wenn der Schaltscheibenkörper 24 entgegen der Kraft der Feder 35 auf dem Synchronkörper 27 entgegen Pfeil 19 verschoben wird, ergibt sich eine zweite Relativ-Stellung und in dieser die kraftschlüssige Klemmung.

Die Anordnung von vieren der Federn 35 entlang des Umfangs einer Schaltscheibe 21 ist ebenfalls aus Figur 2 (unterer Teil) ersichtlich, jedoch bei Zusammenwirken des Zahnrades 11 mit der Abtriebswelle 3. Die Anordnung bei Zahnrad 8 oder 9 ist jedoch gleich.

Die Verschiebung des Schaltscheibenkörpers 24 gegenüber dem Synchronkörper 27 bei den Zahnrädern 8 bzw. 9 erfolgt so, wie das im folgenden für die Schaltscheibenkörper 24′,24˝ und dem Synchronkörper 27′ (links in Figur 1) bezüglich der Zahnräder 13,14 beschrieben wird. Der Synchronkörper 27′ sitzt mittels Kerbverzahnung auf der Abtriebswelle 3. Der Synchronkörper 27′ ist radial außen, an die Flansche 30,31 anschließend, mit einem Zahnkranz, bestehend aus Zähnen 36, versehen (vgl. auch Figur 2). Auf diesen Zähnen 36 sitzt axial verschiebbar die Schaltmuffe 37, die innen einen Zahnkranz, bestehend aus Zähnen 38, aufweist. An dieser Schaltmuffe 37 ist an zwei einander diametral gegenüberliegenden Stellen entlang des Umfangs je ein Schiebestück 39 vorgesehen. In Figur 4 ist ein Schiebestück 39 (allerdings ohne Schaltmuffe 37, die weggelassen ist, um die darunterliegenden Teile zu zeigen; vgl. auch Fig. 5a) zu sehen. Vgl. auch Figur 1 - bei 27 und 27′ - und la. Aus Figur 4 sind jedoch die Zähne 36 des Synchronkörpers 27′ zu sehen, auf denen die Schaltmuffe 37 in axialer Richtung hin- und her verschiebbar ist. Mit der Schaltmuffe 37 verschiebt sich das - in Figur 4 ersichtliche - Schiebestück 39, das zwei Schiebeflächen 39′ und 39˝ aufweist. Die Schiebefläche 39′ wirkt auf eines der Schiebestücke 40 am Schaltscheibenkörper 24′ (Figur 6); die Schiebefläche 39˝ wirkt auf eines der Schiebestücke 40′ am Schaltscheibenkörper 24˝ (Figur 5). Die Anlage der Schiebestücke 40′, 40 am Schiebestück 39 wird durch die Zugfedern 35 sicher gestellt.

Daraus folgt: Wird die Schaltmuffe 37 in axialer Richtung verschoben, so drückt entweder die Schiebefläche 39′ auf das Schiebestück 40 oder die Schiebefläche 39˝ auf das Schiebestück 40′. Je nachdem, welche Bewegung nun die Schaltmuffe 37 und mit ihr das Schiebestück 39 macht, wird nun also entweder der Schaltscheibenkörper 24′ oder der Schaltscheibenkörper 24˝ gegenüber dem Synchronkörper 27′ verdreht. Damit erfolgt auch eine entsprechende Verschiebung der Schaltstege 20 in Umfangsrichtung und somit auch eine kraftschlüssige Ankopplung der Klemmrollen 10 zwischen den jeweiligen Klemmflächen 17 und den betreffenden Innenflächen 18 der zugeordneten Zahnräder. Eines der Zahnräder 13 oder 14 wird damit kraftschlüssig mit der Abtriebswelle 3 verbunden und somit in Schaltstellung verbracht. Gleichzeitig gelangt das andere Zahnrad in Leerlaufstellung.

Wird die in Figur 1 zwischen den Zahnrädern 13,14 sitzende Schaltmuffe 37 nach rechts verschoben, ergibt sich die Stellung nach Figur 4 für das damit verbundene Schiebestück 39. Die Schiebefläche 39′ drückt dann auf das Schiebestück 40, das mit dem Schaltscheibenkörper 24′ verbunden ist, so daß dieser in Richtung des Pfeiles 41 in Figur 6 im Uhrzeigersinn verdreht wird. Mit dem Schaltscheibenkörper 24′ verdrehen sich auch die daran befestigten Schaltstege 20. Dann drücken die Blattfedern 32 die Klemmrollen 10 in Klemmstellung in Nähe von 17′ (Stelle des kürzesten Abstandes der Klemmfläche 17 von der Innenfläche 18 des Zahnrades). Es ergibt sich dann die in Figur 6 gezeigte Stellung, in der eine Klemmung (Kraftschluß) zwischen den Klemmflächen 17 und der Innenfläche 18 des Zahnrades 14 gegeben ist (das jedoch in den Figuren 4,6 der Deutlichkeit halber weggelassen worden ist; seine Lage ist jedoch aus Figur 1 ersichtlich). Somit ist der erste Gang eingeschaltet. Gleichzeitig verdreht sich das Schiebestück 40′ am Schaltscheibenkörper 24˝ (auf der linken Seite von Figur 4) unter dem Einfluß der Zugfedern 35 derart in Umfangsrichtung im Uhrzeigersinn, daß die Schaltstege 20 und mit ihnen die Blattfedern 32 sich soweit im Uhrzeigersinn in Fig. 5 bewegen, daß die Schaltstege 20 auf die in Richtung des Uhrzeigersinns an ihnen anliegenden Klemmrollen direkt einwirken und sie damit aus der Klemmstellung (bei 17′) herausdrücken (in die Stellung bei 17˝). Dann kann sich das Zahnrad 13 gegenüber der Abtriebswelle frei drehen (Fig. 5).

Bis jetzt wurde die "kraftschlüssige" Schaltstellung der Schaltmuffe 37 beschrieben, d.h. insoweit, als eine Klemmung der Klemmrollen 10 zwischen Klemmfläche 17 und Innenfläche 18 des jeweils über einer Klemmfläche 17 angeordneten Zahnrades erfolgt.

Über diese beschriebene Schaltstellung der Schaltmuffe 37 hinaus kann diese jedoch noch in axialer Richtung noch weiter verschoben werden, und zwar derart, daß auch eine formschlüssige Verbindung gegeben ist.

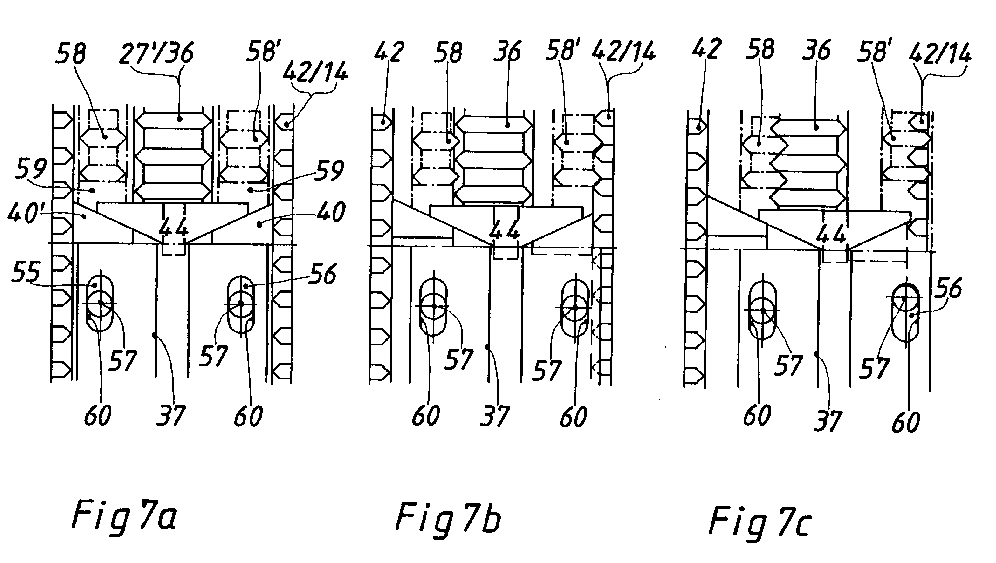

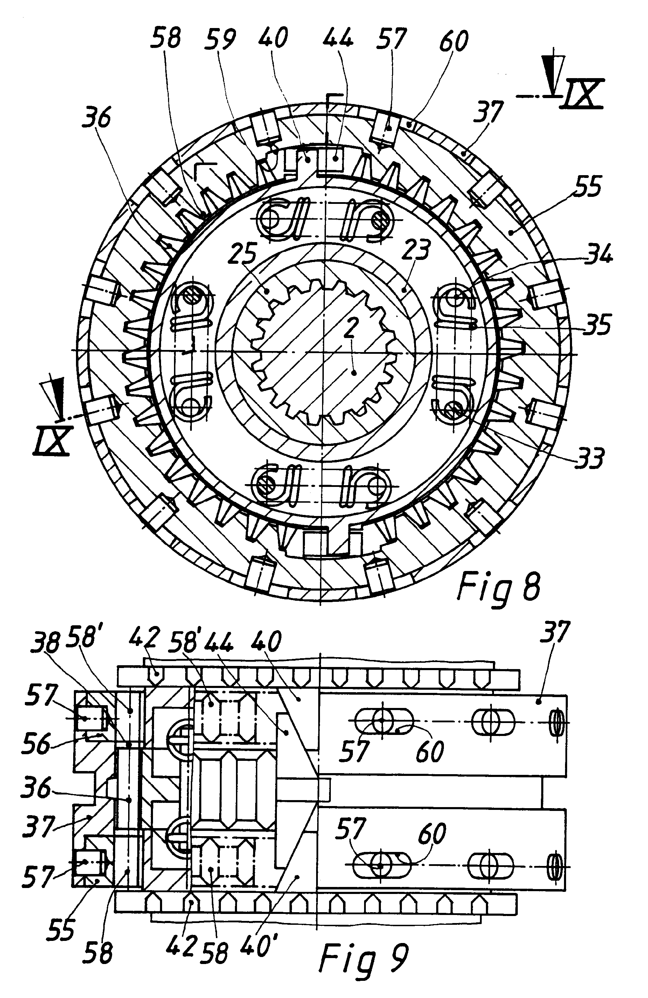

Zu diesem Zweck sind, wie am besten aus Fig. 1b ersichtlich, innerhalb der Schaltmuffe 37 zwei Synchronringe, nämlich der linke Synchronring 55 und der rechte Synchronring 56 vorgesehen. In den Synchronringen 55, 56 sind Stifte 57 fest eingeschraubt oder sonst irgendwie darin fest befestigt. Die Stifte 57 ragen in Langlöcher 60 in der Schaltmuffe 37 hinein (vgl. Fig. 7a, 7b, 7c, 8), so daß sich damit-eine gewisse Verschiebbarkeit entlang des Umfangs zwischen der Schaltmuffe 37 einerseits und den Synchronringen 55, 56 andererseits ergibt. Die Synchronringe 55, 56 sind innen je mit einem Zahnkranz versehen, gebildet durch die Zähne 58, 58′.

Ist, wie wiederum aus Fig. 1 am besten zu ersehen, die Schaltmuffe 37 soweit nach rechts geschoben, daß die am rechten Synchronring 56 innen angebrachten Zähne 58′ die Zähne 42, die am Zahnrad 14 einen zweiten Zahnkranz bilden, überragen, dann ist auch eine formschlüssige Verbindung hergestellt, und zwar von der Abtriebswelle 3 über den Synchronkörper 27′, dessen Zähne 36, die Zähne 38 an der Schaltmuffe 37, die - im Rahmen der Langlöcher 60 gegenüber der Schaltmuffe 37 verschiebbaren - Synchronringe 55 bzw. 56, und den Eingriff der daran vorgesehenen Zähne 58 bzw. 58′ mit den Zähnen 42 an dem jeweils zugeordneten Zahnrad.

Die Verschiebbarkeit der Synchronringe 55, 56 gegenüber der Schaltmuffe 37, wie sie durch den Eingriff der mit den Sychronringen 55, 56 verbundenen Stifte 57 in den Langlöchern 60 gegeben ist, dient dazu, entlang des Umfangs eine gewisse Beweglichkeit der Synchronringe 55, 56 gegenüber der Schaltmuffe 37 zu sichern, so daß sich die Zähne 58 bzw. 58′ - bei bereits erfolgter Klemmung (Kraftschluß) - soweit gegenüber der Schaltmuffe verschieben können, daß ein Eingriff der Zähne 58 bzw. 58′ in die Zähne 42 auch dann möglich ist, wenn die Klemmstellung nicht exakt so erfolgt, daß die Zähne 58, 58′ und 42 ineinanderpassen, sondern wenn noch eine gewisse Beweglichkeit zum Eingriff erforderlich ist. Diese formschlüssige Verbindung bleibt auch bestehen, wenn das Fahrzeug schiebt (bei Fahrt bergabwärts oder wenn man das Gas am Antriebsmotor wegnimmt). Dann löst sich zwar die Klemmung der Klemmrollen 10 und es ist an sich Freilauf gegeben. Der Formschluß verhindert dann aber, sobald die Stifte 57 an einem der Enden der Langlöcher 60 anliegen (vgl. Fig. 7c), das freie Durchdrehen des Zahnrades. Es bleibt also die Kupplung in der Formschluß-Schaltstellung auf jeden Fall erhalten. Figur 1b zeigt also die Schaltstellung bei Formschluß für den 1. Gang (Zahnrad 14). Figur 1a zeigt die neutrale Mittelstellung, bei der sich die beiden benachbarten Zahnräder 8 und 9 in Leerlaufstellung befinden.

Die durch die Zähne 58, 58′ gebildeten inneren Zahnkränze der Synchronringe 55, 56 sind ferner mit Ausnehmungen 59 versehen (vgl. Fig. 8), in denen dann die Schiebestücke 40, 40′, 44 Platz finden.

Wird das Schiebestück 39 nicht - wie in Figur 4 gezeigt - nach rechts, sondern nach links verschoben, dann gelangt das rechte Schiebestück 40 zunächst wieder in die Mittelstellung zurück. Die Schaltmuffe 37 (Fig. 1, 1b) löst sich vom Formschluß mit den Zähnen 42 des Zahnrades 14 und als nächstes löst sich auch der Klemmrollenträger 43 von der Klemmung mit der Innenfläche 18 des Zahnrades 14 infolge der Tatsache, daß sich der Schaltscheibenträger 24′ nun - von den Zugfedern 35 gezogen - wieder in seine Ausgangslage (Leerlauf) zurückbewegen kann.

Bei weiterer Verschiebung des Schiebestückes 39 nach links wird dann völlig analog eine Verbindung des Zahnrades 13 mit dem zugeordneten Klemmrolienträger 43 hergestellt und somit der Rückwärtsgang eingeschaltet. Auf diese Weise kann unmittelbar die Antriebsdrehrichtung von Vorwärts auf Rückwärts (oder umgekehrt) gewechselt werden. Dies ist z.B. bei Verwendung des Schaltgetriebes mit dem Antrieb eines Schiffs oder einer Werkzeugmaschine von Bedeutung.

Die spezielle Form des Schiebestückes 39 nach Fig. 5a, bei der die Schiebeflächen 39′,39˝ zueinander parallel sind, ist bedingt durch die Umschaltung vom ersten Vorwärtsgang in den Rückwärtsgang bzw. umgekehrt. Bei der Umschaltung von dem 2. auf den 3. Gang - also zwischen Zahnrad 16 und 17 - und vom 4. auf den 5. Gang - also zwischen Zahnrad 8 und 9 - hat das Schiebestück 44 die in Figur 5b gezeigte Form, bei der die Schiebeflächen 44′,44˝ entgegengesetzt geneigt sind, so daß sie jeweils eine Verschiebung der zugeordneten Schaltscheibenkörper gegenüber dem Synchronkörper in dieselbe Drehrichtung bewirken. Die verschiedenen Stellungen, die das Schiebestück 44 bei der Umschaltung vom Leerlauf in den dritten Gang annehmen kann, sind in den Figuren 7a,7b,7c dargestellt.

In den Figuren 7a, 7b, 7c sind die Zähne 58, 58′ der Synchronringe 55, 56 strichpunktiert angedeutet, weil sie an der gezeigten Stelle oberhalb der Zeichenebene angeordnet sind.

Figur 7a zeigt die neutrale Mittelstellung. Die Schaltmuffe 37 und mit ihr das Schiebestück 44 befindet sich in der Mitte. Ebenso sind dann auch die Synchronringe 55, 56 und die an diesen innen angebrachten Zähne 58, 58′ symmetrisch bezüglich der Zähne 36, die außen entlang des Umfangs an Synchronkörper 27′ vorgesehen ist.

Figur 7b zeigt die Verschiebung nach rechts bis zum Kraftschluß (Klemmung). Die Schaltmuffe 37 und mit ihr die durch die Zähne 58 bzw. 58′ gebildeten Zahnkränze haben sich schon etwas nach rechts bewegt. Es ist auch ersichtlich, daß die in axialer Richtung nach rechts deutenden Zahnflanken der Zähne 58′ nicht exakt in die Zwischenräume zwischen den Zähnen 42 des zweiten Zahnkranzes auf dem Zahnrad 14 "passen".

Nach weiterer axialer Verschiebung nach rechts ergibt sich Fig. 7c. Die Schaltmuffe 37 und mit ihr die durch die Zähne 58 bzw. 58′ gebildeten Zahnkränze haben sich weiter nach rechts verschoben. Jetzt konnte sich auch der rechte Synchronring 56 entlang des Umfangs etwas gegenüber der Schaltmuffe 37 verschieben (vgl. die Lage des rechten Stiftes 57 im Langloch 60) und demgemäß konnten sich die Zähne 58′ nunmehr genau in die Zwischenräume zwischen den Zähnen 42 des Zahnrades 14 einschieben. Hat also das Schiebestück 44 mit der Schaltmuffe 37 die rechts äußere Endstellung erreicht, so greifen die Zähne 58′ des rechten Synchronringes 56, der - im Rahmen des Eingriffs des Stiftes 57 in das Langloch 60 - an der Schaltmuffe 37 beweglich angeordnet ist, in die Zähne 42 am Zahnrad 14 ein, so daß Formschluß hergestellt ist.

Die Verschiebung der Schaltmuffen 37 erfolgt in bekannter Weise dadurch, daß in eine Nut 47 an der Schaltmuffe 37 ein Finger 48 eingreift, der an einer Schaltklaue 49 befestigt ist, die ihrerseits in bekannter Weise über einen allgemein mit 50 bezeichnetes Schaltgestänge verschoben wird. Dessen Einzelheiten sind jedoch dem Fachmann bekannt bzw. für den Fachmann ohne weiteres ersichtlich, so daß sie hier nicht weiter beschrieben werden müssen.

Das Zahnrad 4 steht - wie oben schon erwähnt - nicht in direktem Eingriff mit dem Zahnrad 13. Der Eingriff erfolgt vielmehr über ein weiteres Zahnrad 51 auf einer Welle 53, die in einer Wand 54 des Gehäuses gelagert ist. Diese Zwischenschaltung erfolgt - da es sich bei dem Zahnrad 13 um dasjenige des Rückwärtsganges handelt - zur Umkehr der Bewegungsrichtung.

## Patentansprüche

1. Schaltkupplung für ein Schaltgetriebe zum Ankuppeln mindestens eines auf einer Welle frei drehbaren, axial unverschiebbaren Zahnrads (8,9,13 bis 16) mittels eines Freiiaufs an diese Welle (2,3) des Getriebes, wobei das bzw. jedes frei drehbare Zahnrad mit einem bzw. jeweils einem drehfest auf einer parallelen Welle (3,2) des Getriebes gehaltenen Zahnrad (4 bis 7,11,12) in ständigem Zahneingriff steht, wobei der bzw. jeder Freilauf mittels einer Schaltmuffe (37) betätigbar ist, die koaxial auf der Welle des frei drehbaren Zahnrads (8,9,13 bis 16) neben letzterem angeordnet und in Achsrichtung begrenzt verschiebbar ist, und wobei jede Rolle (10) des Freilaufs bei betätigter Schaltmuffe (37) zur Drehmomentübertragung gleichzeitig an einer zugeordneten Klemmfläche (17) der Welle (2,3) oder eines auf der Welle drehfest gehaltenen Klemmrollenträgers (43) und an einer Innenfläche (18) ihres Zahnrads (8,9,13 bis 16) anliegt, daß außerdem die Klemmfläche (17) und die Innenfläche (18) jeweils einen sich in Mitnahmerichtung verengenden Spalt für die zugeordnete Rolle (10) bilden, **dadurch gekennzeichnet**, daß ein seitlich neben jedem frei drehbaren Zahnrad (8,9,13 bis 16) angeordneter, auf der Welle (2,3) frei drehbarer Schaltscheibenkörper (24,24′,24˝) mit Schaltstegen (20) zwischen jeweils zwei Rollen (10) eingreift und jede Schaltmuffe (37) wenigstens ein Schiebestück (39,44) trägt, dessen zur Schieberichtung geneigt verlaufende Schiebefläche (39′,39˝;44′,44˝) an einer geneigten Gegenfläche eines zugeordneten radial vorstehenden Schiebestücks (40,40′) des Schaltscheibenkörpers (24,24′,24˝) anliegt, wobei eine seitliche Verschiebung der Schaltmuffe (37) eine Drehbewegung des Schaltscheibenkörpers (24,24′,24˝) mit den Schaltstegen im Sinne einer Verschiebung der Rollen (10) gegen das jeweilige enge Spaltende des Freilaufs hin bewirkt, wobei mindestens eine Feder (35) gespannt wird, die zwischen den Schaltscheibenkörper (24,24′,24˝) und ein wellenfestes Element, insbesondere einen Bolzen (34), geschaltet ist, und daß das Zahnrad (8,9,13-16) auf den Schaltstegen (20) frei drehbar gelagert ist und die Rollen (10) mittels je einer Blattfeder (32) gegen das jeweilige enge Spaltende des Freilaufs hin federbelastet sind.

2. Schaltkupplung nach Anspruch 1, dadurch gekennzeichnet, daß jeweils zwischen zwei einem bestimmten Gang des Schaltgetriebes zugeordneten Zahnrädern (8,9;13,14;15,16) ein drehfest mit der Welle (2,3) gekuppelter Synchronkörper (27,27′,27˝) angeordnet ist, wobei beidseitig eines Mittelsteges (29) des Synchronkörpers je ein begrenzt drehbarer Schaltscheibenkörper (24,24′,24˝) mit einer Schaltscheibe(21) angeordnet ist, und daß die an dieser Schaltscheibe (21) angeordneten Schaltstege (20) in die zwischen jeweils zwei Rollen (10) befindlichen Innenräume der beidseitig benachbart des Synchronkörpers angeordneten Zahnräder hineinragen.

3. Schaltkupplung nach Anspruch 1 oder 2, dadurch gekennzeichnet, daß zum Zwecke einer Direktumschaltung von Vorwärts- auf Rückwärtslauf der Abtriebswelle (3) des Schaltgetriebes ein frei drehbares Zahnrad (14) für einen Vorwärtsgang neben dem frei drehbaren Zahnrad (13) für den Rückwärtsgang angeordnet ist.

4. Schaltkupplung nach wenigstens einer der vorhergehenden Ansprüche, dadurch gekennzeichnet, daß die Schaltscheibe (21) Teil des Schaltscheibenkörpers (24,24′,24˝) ist, der die Schiebestücke (40,40′) trägt, die mit dem oder den Schiebestücken(39,44) zum Drehen des Schaltscheibenkörpers (24) von der ersten in die zweite Drehstellung zusammenwirken.

5. Schaltkupplung nach Anspruch 4, dadurch gekennzeichnet, daß jeweils zwischen einem an der Schaltscheibe (21) angeordneten Bolzen (33) und einem am Synchronkörper (27,27′,27˝) angeordneten Bolzen (34) eine Feder (35), insbesondere eine Zugfeder angeordnet ist.

6. Schaltkupplung nach Anspruch 5, dadurch gekennzeichnet, daß im Zwischenraum zwischen dem Schaltscheibenkörper (24,24′,24˝) und dem Synchronkörper (27,27′,27˝) die an den Bolzen (33 und 34) gehaltenen Zugfedern (35) angeordnet sind, und daß die Zugfedern den Schaltscheibenkörper (24) in eine definierte Ausgangsstellung zum Synchronkörper (27,27′,27˝) ziehen, die durch Anlage der am Schaltscheibenkörper (24) vorgesehenen Schiebestücke (40,40′) an die Schiebestücke (39,44) der Schaltmuffe (37) bestimmt ist, und daß dadurch die Zugfedern (35) die auf der Welle (2,3) angeordneten Teile in Leerlaufstellung gegenüber der Welle halten.

7. Schaltkupplung nach wenigstens einem der vorhergehenden Ansprüche, dadurch gekennzeichnet, daß der Schaltscheibenkörper (24,24′,24˝) auf dem Synchronkörper (27,27′,27˝) drehbar gelagert ist.

8. Schaltkupplung nach wenigstens einem der Ansprüche 2 bis 7, dadurch gekennzeichnet, daß der Synchronkörper (27,27′,27˝) außen Zähne (36) aufweist, in die Zähne (38) eingreifen, die innen an der axial darüber verschiebbaren Schaltmuffe (37), an der das Schiebestück (39,44) befestigt ist, angeordnet sind.

9. Schaltkupplung nach wenigstens einer der vorhergehenden Ansprüche,dadurch gekennzeichnet, daß innerhalb der Schaltmuffe (37) und dieser gegenüber begrenzt drehbeweglich (57,60) Synchronringe (55,56) mit durch Zähne (58,58′) gebildeten Innenverzahnungen angeordnet sind, die in einer Formschluß-Schaltstellung, die über die genannte kraftschlüssige Schiebe-Klemmstellung hinausgeht, mit den Zähnen (42) eines jeweils zugerodneten zusätzlichen Zahnrads (14) des benachbart angeordneten Zahnrads (8,9,13 bis 16) in Eingriff stehen.

10. Schaltkupplung nach wenigstens einem der vorhergehenden Ansprüche, dadurch gekennzeichnet, daß die über die Schaltstege (20) auf die Klemmrollen (10) einwirkenden Federn als Blattfedern(32) ausgebildet sind.

11. Schaltkupplung nach Anspruch 10, dadurch gekennzeichnet, daß die Blattfedern (32) U-förmig gebogen und in Nuten ihres zugeordneten Schaltsteges (20) festgelegt sind.

12. Schaltkupplung nach wenigstens einem der vorhergehenden Ansprüche, dadurch gekennzeichnet, daß die Lage der Schaltstege (20) zwischen den Klemmflächen (17) der Welle (2,3) bzw. des Klemmrollenträgers (43) und den Innenflächen (18) des jeweils auf den Schaltstegen gelagerten Zahnrades (8,9,13,14,15,16) sowie die Abmessungen und Lage der Klemmrollen (10) derart bestimmt sind, daß bei Verdrehung der Schaltstege (20) in Freigaberichtung letztere die Klemmrollen (10), die ihnen an der anderen Seite des jeweiligen Schaltstegs benachbart angeordnet sind, aus der Klemmstellung herausdrücken.

13. Schaltkupplung nach wenigstens einem der vorhergehenden Ansprüche, dadurch gekennzeichnet, daß die Schiebestücke (39,44) an den Schaltmuffen (37) mit je zwei Schiebeflächen (39′,39˝;44′,44˝) versehen sind, die zwei benachbarten frei drehbaren Zahnrädern (8,9;13 bis 16) zugeordnet sind, und daß die Schiebeflächen (39′,39˝) zueinander parallel verlaufen, falls die Zahnräder Gängen entgegengesetzter Drehrichtung zugeordnet sind, und daß die Schiebeflächen (44′,44˝) entgegengesetzt schräg verlaufen, falls die Zahnräder Gängen gleicher Drehrichtung zugeordnet sind.

## Claims

1. A manual transmission clutch which will couple at least one freely rotatable gear (8, 9, 13 to 16) which is fixed axially on a shaft, using a freewheeling mechanism mounted on the input shaft (2, 3) of the transmission, whereby each freely rotatable gear is constantly in mesh with a gear (4 to 7, 11, 12) rigidly mounted on a shaft (3, 2) parallel to the input shaft, and whereby each freewheeling mechanism can be actuated by a clutch-gear sleeve (37), which is mounted coaxially to the shaft with the freely rotatable gear (8, 9, 13 to 16) and which, to a certain extent, can slide axially, and whereby each roller (10) in the freewheeling mechanism fits into a corresponding gripping surface (17) on the shaft (2, 3) or a rigidly mounted inner race with cams (43) slides into the inside (18) of the gear (8, 9, 13 to 16) when the clutch-gear sleeve (37) is engaged for torque transfer, and that, in addition, the gripping surface (17) and the inner surface (18) each form a tapered gap for the corresponding roller (10) in the direction of the drive, characterized by the fact that freely rotatable roller cages (24, 24′, 24˝) mounted on the shaft (2, 3) beside each freely rotating gear (8, 9, 13 to 16), have cams (20) which grip between two rollers (10) and each clutch-gear sleeve (37) has at least one matching sliding element (39, 44), whose sliding surface (39′, 39˝; 44′, 44˝) is tapered in the direction of slide (40, 40′) and is in contact with the opposing tapered surface of a corresponding, radially protruding sliding element of the roller cage (24, 24′, 24˝), whereby a sideways shift of the clutch-gear sleeve (37) causes the roller cage (24, 24′, 24˝) with the cams to rotate slightly such that the rollers (10) shift towards the corresponding narrow gap end of the freewheeling mechanism, whereby at least one spring (35), connected between the roller cage (24, 24′, 24˝) and an element fixed to the shaft, specifically a pin (34), is tensioned, and that the gear (8, 9, 13 to 16) can be freely rotated on the cam (20) and each roller (10) is spring-loaded against the corresponding narrow groove of the freewheeling mechanism by a flat spring (32).

2. A clutch in accordance with claim 1, characterized by the fact that a synchronizer drum (27, 27′, 27˝) is coupled to the shaft (2, 3) so that it rotates with it, between two gears of a certain gear level (8, 9; 13, 14; 15, 16) in the transmission, whereby a roller cage (24, 24′, 24˝) whose rotation is restricted is mounted on both sides of the synchronizer drum's centre crosspiece (29) with an outer race (21), and that the cams (20) installed on the outer race (21) protrude into the space formed between two rollers (10) of the gears located on each side of the synchronizer drum.

3. A clutch in accordance with claim 1 or 2, characterized by the fact that a freely rotatable gear (14) for a forward gear is mounted beside the freely rotatable gear (13) for reverse, in order to make it possible to switch the input shaft (3) of the transmission directly from forwards to reverse.

4. A clutch in accordance with at least one of the preceding claims, characterized by the fact that the outer race (21) is part of the roller cage (24, 24′, 24˝) which supports the sliding elements (40, 40), which operates together with one or several of the sliding elements (39, 44) to rotate the roller cage (24) from the first to the second position of rotation.

5. A clutch in accordance with claim 4, characterized by the fact that a spring (35), preferably a tension spring, is mounted between a pin (33) attached to one of the outer races (21) and a pin (34) attached to the synchronizer drum (27, 27′, 27˝).

6. A clutch in accordance with claim 5, characterized by the fact that tension springs (35) attached to the pins (33 and 34) are located in the space between the roller cage (24, 24′, 24˝) and the synchronizer drum (27, 27′, 27˝), and that the tension springs pull the roller cage (24) towards the synchronizer drum (27, 27′, 27˝) into a defined initial position, which is determined by the position of the sliding elements (40, 40′) mounted on the roller cage (24) in relation to the sliding elements (39, 44) of the clutch-gear sleeve (37), and that the tension springs (35) keep the parts mounted on the shaft (2, 3) in idle position.

7. A clutch in accordance with at least one of the previously mentioned claims, characterized by the fact that the roller cage (24, 24′, 24˝) is rotatably mounted on the synchronizer drum (27, 27′, 27˝).

8. A clutch in accordance with at least one of claims 2 to 7, characterized by the fact that the synchronizer drum (27, 27′, 27˝) has teeth (36) on the outside which mesh with the teeth (38) which are fitted on the inside of the axially rotatable clutch-gear sleeve (37) mounted on the synchronizer drum and on which the sliding element (39, 44) is mounted.

9. A clutch in accordance with at least one of the previously mentioned claims, characterized by the fact that the inside of the clutch-gear sleeve (37) and the slightly rotatable (57, 60) synchronizing rings (55, 56) in relation to the clutch-gear sleeve are fitted with internal gears formed by teeth (58, 58′), which, when positioned for solid drive, go beyond the above-mentioned frictional slide position to mesh with the teeth (42) of an additional gear (14) corresponding to the adjacent gears (8, 9, 13 to 16).

10. A clutch in accordance with at least one of the previously mentioned claims, characterized by the fact that the springs operating with the cams (20) on the rollers (10) are flat springs (32).

11. A clutch in accordance with claim 10, characterized by the fact that the flat springs (32) are bent in a U-shape and are secured in grooves in the corresponding cam (20).

12. A clutch in accordance with at least one of the previously mentioned claims, characterized by the fact that the position of the cams (20) between the gripping surfaces (17) of the shaft (2, 3) or the inner race with cams (43) and the inner surfaces (18) of the gear (8, 9, 13, 14, 15, 16) mounted on the cams, as well as the distance and position of the rollers (10) are determined such that when the cams (20) are rotated in the release direction, the latter push the rollers (10), which are on the other side of the corresponding cam, out of the gripping position.

13. A clutch in accordance with at least one of the previously mentioned claims, characterized by the fact that the sliding elements (39, 44) on the clutch-gear sleeves (37) are equipped with two sliding surfaces (39′, 39˝, 44′, 44˝) each, which are adjacent to two freely rotatable gears (8, 9; 13 to 16), and that the sliding surfaces (39′, 39˝) are parallel to one another, should the gears be arranged for gear levels in the opposite direction, and that the sliding surfaces (44′, 44˝) are slanted at opposite angles to one another, should the gears be arranged in the same rotational direction.

## Revendications

1. Embrayage pour une boîte de vitesses pour l'accouplement au moyen d'une roue libre, d'au moins une roue dentée (8, 9, 13 à 16) fixe axialement et pouvant tourner librement sur un arbre, à cet arbre (2,3) de la boîte de vitesses, la ou chaque roue dentée pouvant tourner librement étant en engrènement constant avec une ou respectivement chaque roue dentée (4 à 7, 11, 12) maintenue fixe en rotation sur un arbre parallèle (3, 2) de la boîte de vitesses, la ou chaque roue libre pouvant être actionnée au moyen d'un manchon d'accouplement (37) qui est placé coaxialement sur l'arbre de la roue dentée (8, 9, 13 à 16) pouvant tourner librement, à côté de cette dernière, et qui peut avoir un mouvement limité dans la direction axiale, chaque galet (10) de la roue libre étant adjacent, lorsque le manchon d'accouplement (37) est actionné, simultanément, à une surface de blocage (17) associée de l'arbre (2, 3) ou d'un support de galets de blocage (43) maintenu fixe en rotation sur l'arbre et à une surface intérieure (18) de sa roue dentée (8, 9, 13 à 16), la surface de blocage (17) et la surface intérieure (18) constituant en outre respectivement un espace se rétrécissant dans le sens d'engrènement pour le galet (10) associé, caractérisé en ce qu'un corps de rondelle d'accouplement (24, 24′, 24˝) pouvant tourner librement sur l'arbre (2, 3), placé latéralement à côté de chaque roue dentée (8, 9, 13 à 16) pouvant tourner librement engrène avec des barrettes d'accouplement (20) entre respectivement deux galets (10) et en ce que chaque manchon d'accouplement (37) porte au moins une pièce coulissante (39, 44) dont la surface de coulissement (39′, 39˝ ; 44′, 44˝) s'étendant de façon oblique par rapport à la direction de coulissement est adjacente à une surface antagoniste oblique d'une pièce coulissante (40, 40′) associée, faisant saillie radialement, du corps de rondelle d'accouplement associé (24, 24′, 24˝), un déplacement latéral du manchon d'accouplement (37) entraînant un mouvement de rotation du corps de rondelle d'accouplement (24, 24′, 24˝) avec les barrettes d'accouplement, dans le sens d'un déplacement des galets (10) contre l'extrémité fendue étroite respective de la roue libre, au moins un ressort (35) étant tendu, lequel ressort étant monté entre le corps de rondelle d'accouplement (24, 24′, 24˝) et un élément fixé sur l'arbre, en particulier un boulon (34), et caractérisé en ce que la roue dentée (8, 9, 13 à 16) est placée de façon à pouvoir tourner librement sur les barrettes d'accouplement (20), et en ce que les galets (10) sont commandés par ressort au moyen d'un ressort à lame (32) contre l'extrémité fendue étroite respective de la roue libre.

2. Embrayage selon la revendication 1, caractérisé en ce que respectivement, entre deux roues dentées (8, 9 ; 13, 14 ; 15, 16) associées à une vitesse déterminée de la boîte de vitesses, est placé un corps synchrone (27, 27′, 27˝) couplé à l'arbre (2, 3) en étant fixe en rotation, un corps de rondelle d'accouplement (24, 24′, 24˝) pouvant avoir une rotation limitée et comportant une rondelle d'accouplement (21), est placée respectivement de chaque côté d'une barrette médiane (29) du corps synchrone, et en ce que les barrettes d'accouplement (20) placées sur cette rondelle d'accouplement (21) font saillie dans les espaces intérieurs, se trouvant respectivement entre deux galets (10) , des roues dentées placées de chaque côté du corps synchrone et près de lui.

3. Embrayage selon les revendications 1 ou 2, caractérisé en ce que, aux fins d'un passage direct de la marche avant à la marche arrière de l'arbre d'entraînement (3) de la boîte de vitesses, une roue dentée (14) pouvant tourner librement pour une marche avant est placée à côté de la roue dentée (13) pouvant tourner librement pour la marche arrière.

4. Embrayage selon l'une au moins des revendications précédentes, caractérisé en ce que la rondelle d'accouplement (21) fait partie du corps de rondelle d'accouplement (24, 24′, 24˝) qui porte les pièces coulissantes (40, 40′) qui interagissent avec les pièces coulissantes (39, 44) pour assurer la rotation du corps de rondelle d'accouplement (24) de la première à la deuxième position de rotation.

5. Embrayage selon la revendication 4, caractérisé en ce qu'un ressort (35), en particulier un ressort de traction, est placé respectivement entre un boulon (33) placé sur la rondelle d'accouplement (21) et un boulon (34) placé sur le corps synchrone (27, 27′, 27˝).

6. Embrayage selon la revendication 5, caractérisé en ce que les ressorts de traction (35) maintenus sur les boulons (33 et 34) sont placés dans l'interstice compris entre le corps de rondelle d'accouplement (24, 24′, 24˝) et le corps synchrone (27, 27′, 27˝), et en ce que les ressorts de traction tirent le corps de rondelle d'accouplement (24) dans une position de départ définie vers le corps synchrone (27, 27′, 27˝), position déterminée par le fait que les pièces coulissantes (40, 40′) prévues sur le corps de rondelle d'accouplement (24) sont adjacentes aux pièces coulissantes (39, 44) du manchon d'accouplement (37), et en ce que de ce fait, les ressorts de traction (35) maintiennent les pièces placées sur l'arbre (2, 3) au point mort par rapport à l'arbre.

7. Embrayage selon l'une au moins des revendications précédentes, caractérisé en ce que le corps de rondelle d'accouplement (24, 24′, 24˝) est disposé sur le corps synchrone (27, 27′, 27˝) de façon à pouvoir tourner.

8. Embrayage selon l'une au moins des revendications 2 à 7, caractérisé en ce que le corps synchrone (27, 27′, 27˝) présente à l'extérieur des dents (36) avec lesquelles engrènent des dents (38) qui sont placées à l'intérieur, du manchon d'accouplement (37) pouvant se déplacer axialement au-dessus, et sur lequel est fixée la pièce coulissante (39, 44).

9. Embrayage selon l'une au moins des revendications précédentes, caractérisé en ce que des bagues de synchronisation (55, 56) sont placées à l'intérieur du manchon d'accouplement (37) et peuvent avoir une rotation limitée (57, 60) par rapport à celui-ci, lesquelles bagues présentent des dentures intérieures formées par des dents (58, 58′) qui sont engrenées, dans une position d'accouplement par crabotage dépassant la position de blocage coulissante commandée par ressort, citée plus haut, avec les dents (42) d'une roue dentée (14) supplémentaire associée respectivement à la roue dentée (8, 9, 13 à 16) voisine.

10. Embrayage selon l'une au moins des revendications précédentes, caractérisé en ce que les ressorts agissant sur les galets de blocage (10) par l'intermédiaire des barrettes d'accouplement (20) sont réalisés sous la forme de ressorts à lame (32).

11. Embrayage selon la revendication 10, caractérisé en ce que les ressorts à lame (32) sont courbés en forme de U et sont placés dans des cannelures de leur barrette d'accouplement (20) associée.

12. Embrayage selon l'une au moins des revendications précédentes, caractérisé en ce que la position des barrettes d'accouplement (20) entre les surfaces de blocage (17) de l'arbre (2,3) ou du support de galets de blocage (43) et les surfaces intérieures (18) de la roue dentée située respectivement sur les barrettes d'accouplement (8, 9, 13, 14, 15, 16) ainsi que les dimensions et la position des galets de blocage (10) sont déterminées de telle façon qu'en cas de rotation des barrettes d'accouplement (20) dans le sens de libération, ces dernières font sortir de la position de blocage les galets de blocage (10) qui sont placés à leur voisinage de l'autre côté de la barrette d'accouplement respective.

13. Embrayage selon l'une au moins des revendications précédentes, caractérisé en ce que les pièces coulissantes (39, 44) situées sur les manchons d'accouplement (37) présentent chacune deux surfaces de coulissement (39′, 39˝ ; 44′, 44˝) qui sont associées à deux roues dentées (8, 9 ; 13 à 16) voisines, pouvant tourner librement, et en ce que les surfaces de coulissement (39′, 39˝) s'étendent parallèlement l'une à l'autre, dans le cas où les roues dentées sont associées à des vitesses de sens de rotation opposés, et en ce que les surfaces de coulissement (44′, 44˝) s'étendent de biais et en opposition, dans le cas où les roues dentées sont associées à des vitesses de même sens de rotation.
